# EUROPÄISCHE PATENTSCHRIFT

(11) **EP 3 504 069 B1**
(45) Veröffentlichungstag und Bekanntmachung des Hinweises auf die Patenterteilung: **03.06.2020**
(21) Anmeldenummer: 17740657.6
(22) Anmeldetag: 05.07.2017
(51) Int. Cl.: B60B 3/10, B60B 7/04, B60B 7/06, B60B 7/08, B60B 7/12

(54) **RAD EINES FAHRZEUGES**
VEHICLE WHEEL
ROUE DE VÉHICULE

(30) Priorität: 26.08.2016 DE 102016216067
(43) Veröffentlichungstag der Anmeldung: 03.07.2019
(73) Patentinhaber: Bayerische Motoren Werke Aktiengesellschaft, 80809 München (DE)
(72) Erfinder: BOURNE, Christopher, 85399 Hallbergmoos (DE); GROTH, Kristian, 81475 München (DE); JÄGERMEYR, Peter, 85368 Wang (DE); KRAUSE, Andreas, 82131 Stockdorf (DE); MAIER, Thomas, 80995 Muenchen (DE); MIESLINGER, Julia, 84028 Landshut (DE); SEIDEL, Mike, 08261 Schöneck (DE)
(86) Internationale Anmeldenummer: PCT/EP2017/066737
(87) Internationale Veröffentlichungsnummer: WO 2018/036704

(56) Entgegenhaltungen:
- DE-A1-102011 079 599
- DE-A1-102011 114 664
- DE-A1-102013 101 421

## Beschreibung

Die Erfindung betrifft ein Rad eines Fahrzeuges nach dem Oberbegriff des Anspruchs 1. Zum Stand der Technik wird beispielshalber auf die DE 10 2011 079 599 A1 verwiesen.

An Räder von Fahrzeugen, insbesondere an solchen von Personenkraftwägen, werden die unterschiedlichsten Anforderungen gestellt. Neben einer ausreichenden Festigkeit bei geringem Gewicht, sollen die Räder einem guten Luftwiderstandsbeiwert des Fahrzeuges förderlich sein und sich durch ein gefälliges optisches Erscheinungsbild auszeichnen. Dazu zählt auch die Tatsache, dass der sichtbare Außenbereich der Räder nur in geringem Maße durch den Abrieb der an der Innenseite (also dem Fahrzeug zugewandten Seite) der Räder vorgesehenen Radbremse verschmutzt wird. Um insbesondere letzteres zu gewährleisten, ist es bekannt, die Freiräume zwischen sämtlichen Speichen eines Rads mittels eines einzigen scheibenförmigen Abdeckelements, welches an der Innenseite des Rades vorgesehen ist, gegenüber der zusammen mit dem Rad rotierenden Bremsscheibe der Radbremse abzudecken. Daneben sind auch Abdeckelemente bekannt, welche Speichenzwischenräume einzeln abdeckenden. Ein solches ist beispielsweise in der DE 10 2011 079 599 A1 aufgezeigt. Um eine ausreichende Festigkeit zu gewährleisten, ist das darin aufgezeigte Abdeckelement aus einem faserverstärkten Kunststoff ausgeführt. Das Abdeckelement wird anschließend mit dem Rad bzw. den Speichen verklebt.

Nachteilig an diesem Stand der Technik ist, dass zur Vermeidung von Korrosion zwischen dem faserverstärkten Abdeckelement und dem Rad sowie zur Sicherstellung einer ausreichend festen Verbindung dieser beiden, ein zeitaufwändiger Klebeprozess notwendig ist, welcher den Montageprozess deutlich erschwert. Des Weiteren ist das spätere Entfernen bzw. das Auswechseln eines Abdeckelements bei einer verklebten Ausführung nur erschwert möglich. Jedoch ist es bei faserverstärkten Kunststoffen, insbesondere bei der Verwendung von Langfasern, welche der Gewährleistung der gewünschten Festigkeit dienen, schwierig, ein anderes Fügeverfahren zu verwenden, ohne dabei die Fasern zu behindern oder zu zerstören.

Es ist somit Aufgabe der Erfindung, ein Rad eines Fahrzeuges mit einem Abdeckelement aufzuzeigen, welches neben einer optimalen Luftkühlung, einer hohen Festigkeit und einem geringen Gewicht, eine einfache Montage und Demontage gewährleistet.

Die Lösung der Aufgabe ergibt sich durch ein Rad eines Fahrzeuges mit den Merkmalen des Anspruchs 1. Vorteilhafte Aus- und Weiterbildungen sind Inhalt der Unteransprüche.

Es wird ein Rad eines Fahrzeuges, insbesondere eines Kraftfahrzeuges, vorgeschlagen, welches neben einer Felge zum Aufziehen eines Reifens, einem Nabenabschnitt zur Montage des Rades am Fahrzeug, zumindest zwei den Nabenabschnitt mit der Felge verbindende Speichen umfasst. Der Speichenzwischenraum bzw. der Freiraum zwischen den Speichen ist dabei zumindest teilweise von einem überwiegend flächigen Abdeckelement überdeckt. Erfindungsgemäß ist das Abdeckelement dabei aus zwei unterschiedlichen Materialschichten hergestellt.

Zur Sicherstellung einer ausreichenden Kühlung der Radbremse, ist der Speichenzwischenraum bzw. der Freiraum zwischen den Speichen bevorzugt nur teilweise von dem genannten Abdeckelement abgedeckt. Der genannte Freiraum beschreibt, einhergehend mit der üblichen Geometrie eines Rads eines Fahrzeuges, bevorzugt einen keilförmigen bzw. dreiecksförmigen Freiraum. Das Abdeckelement ist demnach ebenfalls bevorzugt keilförmig bzw. in der Form eines Ringabschnittes ausgebildet.

Unter einem überwiegend flächigen Abdeckelement wird im Sinne der Erfindung ein in seiner Gesamtheit flächiges Element verstanden, welches jedoch trotzdem geringfügige Erhöhung bzw. Unebenheiten in dessen geometrischer Gestaltung aufweisen kann.

Die Verwendung eines Abdeckelements, welches aus zwei unterschiedlichen Materialschichten hergestellt ist, ermöglicht es die Vorteile verschiedener Materialien zu nutzen und damit ein den Anforderungen optimal entsprechendes Abdeckelement bereitzustellen.
So ist es vorgesehen dass das Abdeckelement eine Metallschicht, sowie eine in einem Hinterspritzprozess hergestellte und damit an die Metallschicht gefügte Kunststoffschicht umfasst. Im Einbauzustand des Abdeckelement zwischen den Speichen des Rads kann die Metallschicht dann vorzugsweise außen, also an der vom Fahrzeug abgewandten Seite am Rad und die Kunststoffschicht an der inneren, also an der dem Fahrzeug zugewandten Seite am Rad bzw. an den Speichen angeordnet sein.
Materialbedingt erfüllt somit die Metallschicht die erforderlichen Festigkeitsanforderungen an das Abdeckelement, während die Kunststoffschicht zusätzlichen Halt bringt und beispielsweise in einem Hinterspritzprozess einfach zu fertigen und im gleichen Prozessschritt an die Metallschicht zu fügen ist.
Das erforderliche geringe Gewicht des Abdeckelements kann durch eine verhältnismäßig dünne Metallschicht gegenüber der Kunststoffschicht sichergestellt werden. Besonders bevorzugt befinden sich die Metallschichtdicke in einer Größenordnung von 0,3 mm und 0,5 mm und die Kunststoffschichtdicke in einer Größenordnung von 2,5 und 4 mm.
Dadurch dass die Metallschicht die notwendigen Festigkeitseigenschaften aufweist, muss der Kunststoff nicht zwingendermaßen mittels Fasern verstärkt werden, weshalb dieser hinsichtlich der zu verwendenden Fügeverfahren deutlich flexibler ist als die aus dem Stand der Technik bekannte Ausführung eines faserverstärkten Abdeckelements. Des Weiteren dient die im Einbauzustand des Abdeckelements nach außen (also vom Fahrzeug abgewandt) ausgerichtete Metallschicht zum Steinschlagschutz.
Wie bereits genannt, ist die Kunststoffschicht dabei in einem Hinterspritzprozess an die Metallschicht angebracht, wobei als positiver Zusatzeffekt ein Schutz vor Korrosion der Schnittkante zwischen Metall und Kunststoff hergestellt sowie eine Unterwanderung deren Oberfläche durch Rost bzw. Korrosion oder dergleichen vermieden werden kann.

In einer nächsten Ausführung der Erfindung, ist das Abdeckelement mittels eines sich über den Umfang an der dem Fahrzeug zugewandten Seite der Speichen erstreckenden Federring kraftschlüssig am Rad gehalten. Der Federring selbst ist dabei formschlüssig mit dem Abdeckelement verbunden. Dieser Formschluss ist bevorzugt durch ein Verhaken bzw. Einhaken des Federrings in eine im Hinterspritzprozess hergestellte Nut in der Kunststoffschicht realisiert. Der Federring spannt damit quasi die Abdeckelemente in Radialrichtung vor und fixiert diese außerdem in Axialrichtung, wobei die Abdeckelemente in den Speichenzwischenräumen gehalten werden können. Hierzu ist ein einziger Federring ausreichend, welcher sich einmal über den Umfang des Rades erstreckt und dabei mit allen vorhandenen Abdeckelementen formschlüssig verbunden ist.

In einer weiteren bevorzugten Ausführung der erfindungsgemäßen Technologie ist das Abdeckelement (mit oder ohne einem zuvor ausgeführten Federring) formschlüssig an den Speichen und/oder an der Felge und/oder an dem Nabenabschnitt gehalten.
Dabei kann das Abdeckelement beispielsweise mittels einer Clipverbindung an den Speichen und/oder an der Felge und/oder an dem Nabenabschnitt gehalten sein. Besonders bevorzugt ist das Abdeckelement dabei mittels einer Clipverbindung an den innenliegenden bzw. der dem Fahrzeug zugewandten Speichenkanten zweier benachbarter Speichen zwischen diesen gehalten.

Die genannte Clipverbindung ist dabei bevorzugt kein separat anzuordnendes Bauteil, sondern kann beispielswiese einen Teil der in einem Hinterspritzprozess hergestellten und mit der Metallschicht gefügten Kunststoffschicht darstellen. Denn der genannte Hinterspritzprozess, als Sonderform eines Spitzgussprozess, ermöglicht eine hohe Formfreiheit bei gleichzeitig einfacher Fertigung.

Eine derartige Clipverbindung umfasst dabei bevorzugt mindestens zwei Befestigungsclips, welche ihrerseits an der, im Einbauzustand des Abdeckelements betrachtet, dem Fahrzeug zugewandten Seite (also jener Seite zu welcher auch die Kunststoffschicht ausgerichtet ist) angeordnet sind. Wie oben bereits erwähnt können die Befestigungsclips im Hinterspritzprozess als gemeinsames Bauteil mit der Kunststoffschicht bzw. mit dem Abdeckelement hergestellt sein.
Besonders bevorzugt haken sich die genannten Befestigungsclips beispielsweise beim Andrücken der Abdeckelemente von außen in die jeweilig innen liegende Kante der sich benachbarten Speichen ein, wodurch sich der genannte Formschluss ergibt.

In einer weiteren bevorzugten Ausgestaltung der Erfindung umfassen die Befestigungsclips ein zumindest annähernd in Axialrichtung des Rads vom flächigen Abdeckelement (bevorzugt von der Kunststoffschicht) abstehendes und zumindest annähernd in Richtung der in Radialrichtung des Rads verlaufenden Winkelhalbierenden bzw. Symmetrielinie des (keilförmigen) Speichenzwischenraums ausgerichtetes Befestigungsbein. An dem freien Ende dieses Befestigungsbeins ist mit einem bestimmen Winkel abstehend von diesem bevorzugt eine Rastnase angeordnet, welche an einer dem Fahrzeug zugewandten Kante der jeweiligen Speiche einrastet bzw. sich einhakt.
Da das Befestigungsbein in Richtung der Winkelhalbierenden bzw. der Symmetrielinie und nicht in Radialrichtung der keilförmigen Speichenkanten ausgerichtet ist, wird die Rastnase beim Einhaken bzw. Einrasten mit der bzw. in die innere Kante der jeweiligen Speiche radial in Richtung des Außenumfangs des Rads vorgespannt bzw. in Richtung der Felge gedrückt. Die dabei erzeugte Vorspannung (radial nach Außen) des Abdeckelements verhindert ein Verrutschen oder Herausrutschen des Abdeckelements innerhalb des (keilförmigen bzw. dreiecksförmigen) Speichenzwischenraums bzw. innerhalb des Freiraums. Bevorzugt grenzt das Abdeckelement dabei an der sogenannten Klebegewichtsfläche an, an welcher üblicherweise Wuchtgewichte angebracht sind.

Um einen Festsitz der Clipverbindung zu gewährleisten und die Abzugskräfte dieser ausreichend hoch zu gestalten, ist es in einer weiteren bevorzugten Ausführung der Erfindung vorgesehen, dass die Befestigungsclips zusätzlich durch ein Federelement in Umfangsrichtung des Rades vorgespannt sind. Beispielsweise kann hierzu ein Federclip verwendet werden, welcher sich entweder zwischen den beiden (sich gegenüber der Winkelhalbierenden symmetrisch gegenüberliegenden) Bestigungsclips oder jeweils an einem Befestigungsclip abstützt, sodass der Befestigungsclip und insbesondere die Rastnase dieses in Umfangsrichtung fester an die Speichenkanten gedrückt bzw. gespannt werden. Das Federelement kann dabei sowohl als ein separat anzubringendes Element oder ebenso als Teil des Abdeckelements ausgebildet sein. Bei einem separat angebrachten Federclip kann das Abdeckelement dann vorn der dem Fahrzeug abgewandten Seite in den Speichenzwischenraum eingedrückt werden, während die Federclips dann von der anderen Seite (also die dem Fahrzeug zugewandte Seite) an das Abdeckelement angebracht werden können.

In einer nächsten bevorzugten Ausführung der Erfindung ist mindestens eine axial vom flächigen Abdeckelement auf der dem Fahrzeug zugewandten Seite abstehende Orientierungsrippe angeordnet, welche einen Abstand zwischen den Kanten des flächigen Abdeckelements und an dieses angrenzende Radbestandteile gewährleistet. Derartige Orientierungsrippen können, wie die Clipverbindung auch, gemeinsam in dem Hinterspritzprozess der Kunststoffschicht hergestellt und damit ein Teil dieser Kunststoffschicht darstellen. Sie sind derart am Abdeckelement (bevorzugt an der nach Innen ausgerichteten Seite des Abdeckelements) positioniert, dass stets ein Spalt zwischen den Kanten des flächigen Abdeckelements und den von diesem benachbarten bzw. angrenzenden Radbestandteilen, wie beispielsweise den Speichen, der Felge, dem Felgenhornbereich und/oder der Klebegewichtsfläche, herrscht.
Durch derartige Orientierungsrippen und den durch diese verursachten Spalt um das Abdeckelement herum, kann ein permanenter Wasserablauf durch diesen Spalt gewährleistet werden.

Des Weiteren ist es bevorzugt, dass das Abdeckelement mindestens eine dieses am Rad abstützende Kontaktrippe umfasst, welche axial vom flächigen Abdeckelement abstehend auf der dem Fahrzeug zugewandten Seite angeordnet ist. Eine solche Kontaktrippe kann ebenso ein in dem Hinterspritzprozess hergestelltes Teil der Kunststoffschicht darstellen, welche durch Abstützen an angrenzenden Radbestandteilen eine zusätzliche Haltefunktion ausübt. Beispielsweise kann sich eine solche Kontaktrippe an der Klebegewichtsfläche des Rads abstützen und dadurch ein Herausspringen des Abdeckelements in Radialrichtung vermeiden. Darüber hinaus können noch weitere Kontaktrippen am Abdeckelement angeordnet sein.

Da es möglich ist, dass das Abdeckelement den Zugang (von Außen) an das Lufteinlass- bzw. Luftauslassventil des Rads bzw. des Reifens blockiert bzw. abdeckt, ist in einer bevorzugten Ausführung der Erfindung eine Öffnung im Abdeckelement vorgesehen, die dann den erforderlichen Zugang von Außen (also der dem Fahrzeug abgewandten Seite des Rades) ermöglicht.

Alternativ bzw. zusätzlich dazu kann ein Zugang zum Lufteinlass- bzw. Luftauslassventil auch durch ein einfaches Lösen der Clipsverbindung und ein Abnehmen des Abdeckelements ermöglicht werden. Darüber hinaus ermöglicht die einfache Lösbarkeit des Abdeckelements allgemein einen unproblematischen Austausch von Abdeckelementen, sollte ein solcher beispielsweise durch Beschädigung oder zur Reinigung erforderlich sein.

Die hier aufgezeigte Erfindung ermöglicht durch die unterschiedlichen Ausführungsformen (gemeinsam, kombiniert oder auch unabhängig voneinander) ein hinsichtlich der Aerodynamik optimiertes und einfach zu montierendes/demontierendes, sowie ein den Festigkeits- und Gewichtsanforderungen gerecht werdendes Rad.
Erfindungswesentlich können dabei sämtliche näher beschriebenen Merkmale sein.

Im Folgenden wird die Erfindung anhand eines Ausführungsbeispiels weiter erläutert. Erfindungswesentlich können auch hierbei sämtliche näher beschriebenen Merkmale sein.
Figur 1 zeigt dabei ein Rad eines Fahrzeuges mit einer Vielzahl von jeweils gleich ausgebildeten Abdeckelementen.
Figur 2 zeigt eines der Abdeckelemente aus Figur 1 in einer dreidimensionalen Detailansicht.
Figur 3 zeigt einen Speichenzwischenraum des Rads aus Figur 1 in einer Detailansicht, in welcher nur eine Clipverbindung (ohne ein flächiges Abdeckelement) aufgezeigt ist.

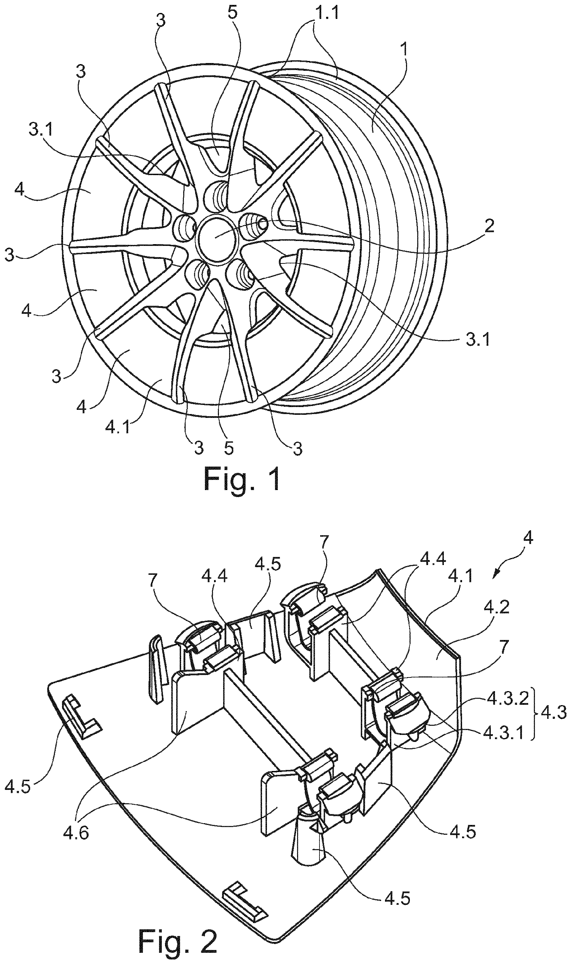

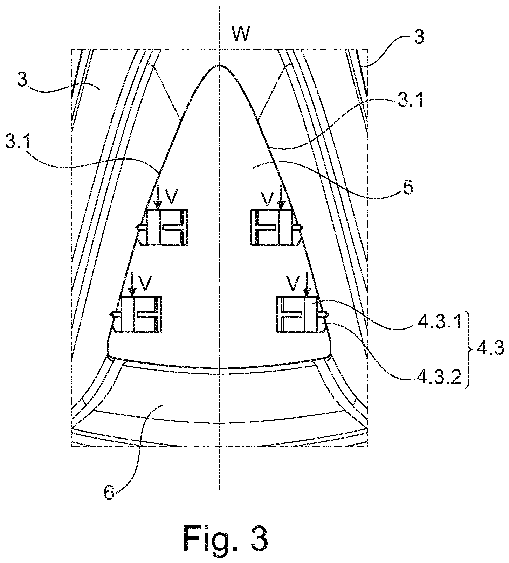

In **Figur 1** wird ein Rad eines Fahrzeuges aufgezeigt, welches neben einer Felge 1 und einem Nabenabschnitt 2, mehrere diese beiden verbindende Speichen 3 umfasst. Zwischen jeder dieser Speichen 3 befindet sich dabei ein Freiraum bzw. Speichenzwischenraum 5, welcher in diesem Beispiel teilweise durch ein flächiges Abdeckelement 4 abgedeckt ist. Das Abdeckelement 4 ist dabei erfindungsgemäß aus zwei unterschiedlichen Materialschichten, nämlich aus einer (im Einbauzustand und im in **Figur 1** abgebildeten Zustand betrachtet) äußeren Metallschicht 4.1, sowie eine dem Fahrzeug zugewandte, also quasi auf das Radinneren ausgerichtete, Kunststoffschicht 4.2 die in **Figur 1** nicht zu erkennen ist. Dabei deckt das Abdeckelement 4 den Speichenzwischenraum 5 zur Gewährleistung einer Luftkühlung der nicht abgebildeten Radbremse nicht vollkommen ab. Aufgrund von aerodynamischen Vorteilen grenzt das Abdeckelement 4 in diesem konkreten Fall an den beiden Speichen, sowie am Felgenhorn 1.1 bzw. an der Klebegewichtsfläche 6 des Rads an.
**Figur 2** zeigt das flächige Abdeckelement 4 in einem nicht eingebauten Zustand und diesmal quasi von der anderen Seite, also der Seite, an welcher die genannte Kunststoffschicht 4.2 abgebildet ist und welche im Einbauzustand (**Figur 1**) dem Fahrzeug zugewandt ist. Die genannte Kunststoffschicht 4.2 wurde dabei in einem Hinterspritzprozess an die Metallschicht 4.1 gefügt bzw. angebracht und so das flächige Abdeckelement 4 hergestellt. In dem gleichen Hinterspritzprozess sind auch die zur Befestigung des Abdeckelements an den Speichen 3 erforderliche Befestigungsclips 4.3, sowie weitere von der flächigen Kunststoffschicht 4.2 abstehende Elemente bzw. Rippen hergestellt, auf welche im späteren Verlauf der Beschreibung genauer eingegangen wird.
In diesem Fall wird das Abdeckelement mittels vier (gleich ausgebildeten) Befestigungsclips 4.3 an der jeweils inneren Kante 3.1 jeder Speiche 3 (also solche die dem Fahrzeug zugewandt ist) eingerastet bzw. eingeclipst und damit gehalten. Ein jeder Befestigungsclips 4.3 umfasst dabei ein im Einbauzustand (**Figur 1**) des Abdeckelements 4 betrachtet zumindest annähernd in Axialrichtung des Rads vom flächigen Abdeckelement 4 abstehendes und zumindest annähernd in Richtung der Winkelhalbierenden W des Speichenzwischenraums 5 ausgerichtetes Befestigungsbein 4.3.1. Neben dem Befestigungsbein 4.3.1 umfasst der Befestigungsclips 4.3 außerdem eine am freien Ende des Befestigungsbeins 4.3.1 angeordnete Rastnase 4.3.2, welche zum Einrasten bzw. Verhaken mit den inneren Speichenkanten 3.1 dient. Die Ausrichtung des Befestigungsbeins 4.3.1 zeigt dabei unabhängig von der Form bzw. Geometrie des flächigen Abdeckelements 4 stets in Richtung der Winkelhalbierenden W eines Speichenzwischenraums 5. Zur Verdeutlichung dieses Sachverhalts sind die vier (gleich ausgebildeten) Befestigungsclips 4.3 im Einbauzustand des Abdeckelements 4 ohne die flächigen Materialschichten in **Figur 3** abgebildet. Dabei ist die Parallelität (zumindest nahezu Parallelität) der Ausrichtung des Befestigungsbeins 4.3.1 zur Winkelhalbierenden W des keilförmigen bzw. dreiecksförmigen Speichenzwischenraums 5 zu erkennen. Es muss nicht zwingendermaßen eine exakte Parallelität zwischen der Winkelhalbierenden W und der Ausrichtung des Befestigungsbeins 4.3.1 herrschen. Wichtig ist jedoch, dass sich die Ausrichtung des Befestigungsbeins 4.3.1 zumindest der der Winkelhalbierenden W annähernd. Denn durch die unterschiedliche Ausrichtung der Speichenkante 3.1, welche in Radialrichtung des Rads verläuft und des Befestigungsbeins 4.3.1, welches in diesem Fall in Richtung der Winkelhalbierenden W verläuft, erzeugt im eingeclipsten Zustand des Abdeckelements 4 eine Vorspannung V dieses, radial in Richtung des Außenumfangs des Rades bzw. in Richtung der Klebegewichtsfläche 6 des Rads. Die dabei erzeugte Vorspannung V des Abdeckelements 4 verhindert ein Verrutschen oder Herausrutschen dieses innerhalb des keilförmigen bzw. dreiecksförmigen Speichenzwischenraums 5.
Um einen optimalen Festsitz und die erforderlichen Abzugskräfte der Verbindung zu gewährleisten, werden die Befestigungsclips 4.3 zusätzlich durch jeweils einen in Figur 2 gezeigten Federclip 7 gehalten. Dabei stützt sich jeweils ein separat angeordneter Federclip 7 an dem Befestigungsclip 4.3 sowie an einem weiteren von der flächigen Kunststoffschicht 4.2 axial (im Einbauzustand) abstehendes Abstützelement 4.4 ab.
Neben den genannten Befestigungsclips 4.3 und den Abstützelementen 4.4 sind in **Figur 2** noch weitere, von der flächigen Kunststoffschicht 4.2 axial (im Einbauzustand) abstehende, Elemente aufgezeigt. All diese sind im gleichen Herstellungsprozess, nämlich dem Hinterspritzprozess mit der Kunststoffschicht 4.3 hergestellt worden, weshalb sie mit den flächigen Materialschichten ein gemeinsames Bauteil, nämlich das Abdeckelement 4 darstellen. So sind beispielsweise sogenannte Orientierungsrippen 4.5 am Abdeckelement auf der Seite der Kunststoffschicht 4.2 (im Einbauzustand) axial vom Abdeckelement 4 abstehend zu erkennen. Diese sind zur Sicherstellung eines Spalts bzw. Abstandes zwischen den Kanten des flächigen Abdeckelements 4 und den an diesen angrenzenden anderen Radbestandteilen, wie in diesem Fall beispielsweise der Klebegewichtsfläche 6, sowie der Speichen 3. Ein derartiger Spalt gewährleistet einen dauerhaften Wasserabfluss durch die Abdeckelemente 4 hindurch und verhindert damit eine das Rad womöglich beschädigende Wasser- bzw. Schmutzansammlung.
Daneben sind außerdem zwei (im Einbauzustand des Abdeckelements 4) die Klebegewichtsfläche 6 kontaktierende Kontaktrippen 4.6 axial vom flächigen Abdeckelement 4 abstehend angeordnet. Solche Kontaktrippen 4.6 sorgen für eine zusätzliche Haltefunktion des Abdeckelements 4 innerhalb der Einbauposition. In diesem Fall unterstützten die Kontaktrippen 4.6 beim Verhindern des Herausspringens des Abdeckelements in Radialrichtung.

### Bezugszeichenliste:

- 1: Felge
- 2: Nabenabschnitt
- 3: Speiche
- 3.1: Innere Speichenkante
- 4: Abdeckelement
- 4.1: Metallschicht
- 4.2: Kunststoffschicht
- 4.3: Befestigungsclips
- 4.3.1: Befestigungsbein
- 4.3.2: Rastnase
- 4.4: Abstützelement
- 4.5: Orientierungsrippe
- 4.6: Kontaktrippe
- 5: Speichenzwischenraum
- 6: Klebegewichtsfläche
- 7: Federclip
- W: Winkelhalbierende
- V: Vorspannung

## Patentansprüche

1. Rad für ein Fahrzeug, insbesondere ein Kraftfahrzeug, umfassend eine Felge (1), einen Nabenabschnitt (2), sowie zumindest zwei den Nabenabschnitt (2) mit der Felge (1) verbindende Speichen (3), wobei mindestens ein Speichenzwischenraum (5) zwischen den Speichen (3) zumindest teilweise von einem überwiegend flächigen Abdeckelement (4) abgedeckt ist, **dadurch gekennzeichnet, dass** das Abdeckelement (4) aus zwei unterschiedlichen Materialschichten (4.1, 4.2) hergestellt ist und wobei das Abdeckelement eine Metallschicht (4.1), sowie eine in einem Hinterspritzprozess hergestellte und damit an die Metallschicht (4.1) gefügte Kunststoffschicht (4.2) umfasst.

2. Rad nach Anspruch 1, wobei das Abdeckelement (4) mittels eines sich über den Umfang des Rads an der dem Fahrzeug zugewandten Seite der Speichen (3) erstreckenden Federrings kraftschlüssig an dem Rad gehalten ist, wobei der Federring selbst formschlüssig mit dem Abdeckelement (4) verbunden ist.

3. Rad nach einem der vorangegangenen Ansprüche, wobei das Abdeckelement (4) formschlüssig an den Speichen (3) und/oder an der Felge (1) und/oder an dem Nabenabschnitt (2) gehalten ist.

4. Rad nach einem der vorangegangenen Ansprüche, wobei das Abdeckelement (4) mittels einer Clipverbindung an die Speichen (3) und/oder an der Felge (1) und/oder an dem Nabenabschnitt (2) gehalten ist.

5. Rad nach Anspruch 4, wobei die Clipverbindung mindestens zwei Befestigungsclips (4.3) umfasst, welche ihrerseits an der, im Einbauzustand des Abdeckelements (4) betrachtet, dem Fahrzeug zugewandten Seite angeordnet sind und ein Teil der im Hinterspritzprozess hergestellten Kunststoffschicht (4.2) sind.

6. Rad nach Anspruch 5, wobei die Befestigungsclips (4.3) jeweils mindestens ein zumindest annähernd in Axialrichtung des Rads vom flächigen Abdeckelement (4) abstehend und zumindest annähernd in Richtung der in Radialrichtung des Rades verlaufenden Winkelhalbierenden (W) des Speichenzwischenraums (5) ausgerichtetes Befestigungsbein (4.3.1) umfassen, an welchem eine Rastnase (4.3.2) zum Einrasten an einer dem Fahrzeug zugewandten Kante (3.1) der jeweiligen Speiche (3) angeordnet ist.

7. Rad nach einem der vorangegangenen Ansprüche 5 oder 6, wobei die Befestigungsclips (4.3) zusätzlich durch ein Federelement (7) in Umfangsrichtung des Rades vorgespannt sind.

8. Rad nach einem der vorangegangenen Ansprüche, wobei mindestens eine axial vom flächigen Abdeckelement (4) auf der dem Fahrzeug zugwandten Seite abstehende Orientierungsrippe (4.5) angeordnet ist, welche einen Abstand zwischen den Kanten des flächigen Abdeckelements und an dieses angrenzende Bauteile gewährleistet.

9. Rad nach einem der vorangegangenen Ansprüche, wobei mindestens eine das Abdeckelement (4) am Rad abstützende Kontaktrippe (4.6) axial vom flächigen Abdeckelement (4) abstehend auf dessen dem Fahrzeug zugewandten Seite angeordnet ist.

10. Rad nach einem der vorangegangenen Ansprüche, wobei das Abdeckelement (4) eine Öffnung umfasst, welche einen Zugang zu einem Luftventil eines Reifens sicherstellt.

## Claims

1. A wheel for a vehicle, especially a motor vehicle, comprising a rim (1), a hub portion (2), and at least two spokes (3) connecting the hub portion (2) to the rim (1), at least one spoke intermediate space (5) between the spokes being at least partially covered by a predominantly flat cover element (4), **characterised in that** the cover element (4) is produced from two different material layers (4.1, 4.2), the cover element comprising a metal layer (4.1) and also a plastics layer (4.2) which is produced in an injection moulding process and is thereby joined to the metal layer (4.1).

2. A wheel according to claim 1, wherein the cover element (4) is held on the wheel in a frictionally engaged manner by means of a spring ring extending over the circumference of the wheel on the side of the spokes (3) that faces the vehicle, the spring ring being itself connected to the cover element (4) interlockingly.

3. A wheel according to one of the preceding claims, wherein the cover element (4) is held interlockingly on the spokes (3) and/or on the rim (1) and/or on the hub portion (2).

4. A wheel according to one of the preceding claims, wherein the cover element (4) is held on the spokes (3) and/or on the rim (1) and/or on the hub portion (2) by means of a clip connection.

5. A wheel according to claim 4, wherein the clip connection comprises at least two fastening clips (4.3) which, for their part, as considered in the installed state of the cover element (4), are arranged on the side facing the vehicle and are part of the plastics layer (4.2) produced in the injection moulding process.

6. A wheel according to claim 5, wherein the fastening clips (4.3) each comprise at least one fastening leg (4.3.1), which protrudes at least approximately in the axial direction of the wheel from the flat cover element (4) and is oriented at least approximately in the direction of the angular bisector (W) of the spoke intermediate space (5), which bisector runs in the radial direction of the wheel, on which fastening leg there is arranged a latching lug (4.3.2) for latching in at an edge (3.1), which faces the vehicle, of the relevant spoke (3).

7. A wheel according to one of preceding claims 5 or 6, wherein the fastening clips (4.3) are additionally prestressed in the circumferential direction of the wheel by a spring element (7).

8. A wheel according to one of the preceding claims, wherein at least one orientation rib (4.5) is arranged protruding axially from the flat cover element (4) on the side facing the vehicle and ensures a distance between the edges of the flat cover element and components adjacent thereto.

9. A wheel according to one of the preceding claims, wherein at least one contact rib (4.6), which supports the cover element (4) on the wheel, is arranged protruding axially from the flat cover element (4) on the side of the cover element which faces the vehicle.

10. A wheel according to one of the preceding claims, wherein the cover element (4) comprises an opening which ensures access to an air valve of a tyre.

## Revendications

1. Roue destinée à un véhicule en particulier à un véhicule automobile comprenant une jante (1), un segment de moyeu (2) ainsi qu'au moins deux rayons (3) reliant le segment de moyeu (2) à la jante (1), au moins le volume intermédiaire (5) situé entre les rayons (3) étant recouvert au moins partiellement par un élément de recouvrement (4) essentiellement plat,
**caractérisée en ce que**
l'élément de recouvrement (4) est réalisé en deux couches de matériau différentes (4.1, 4.2), et comporte une couche métallique (4.1) ainsi qu'une couche en matériau synthétique (4.2) fabriquée par un processus de surmoulage et ainsi assemblée à la couche métallique (4.1).

2. Roue conforme à la revendication 1,
dans laquelle l'élément de recouvrement (4) est maintenu par une liaison par la force sur la roue au moyen d'un anneau élastique s'étendant sur la périphérie de la roue sur le côté des rayons (3) tournés vers le véhicule, l'anneau élastique étant relié par une liaison par la forme avec l'élément de recouvrement (4).

3. Roue conforme à l'une des revendications précédentes,
dans laquelle l'élément de recouvrement (4) est maintenu par une liaison par la forme sur les rayons (3) et/ou sur la jante (1) et/ou sur le segment de moyeu (2).

4. Roue conforme à l'une des revendications précédentes,
dans laquelle l'élément de recouvrement (4) est maintenu sur les rayons (3) et/ou sur la jante (1) et/ou sur le segment de moyeu (2) par une liaison par enclipsage.

5. Roue conforme à la revendication 4,
dans laquelle la liaison par enclipsage comporte au moins deux clips de fixation (4.3) qui sont installés sur le côté tourné vers le véhicule considéré dans l'état de montage de l'élément de recouvrement (4), et constituent une partie de la couche en matériau synthétique (4.2) obtenue par un processus de surmoulage.

6. Roue conforme à la revendication 5,
dans laquelle les clips de fixation (4.3) comprennent chacun au moins une patte de fixation (4.3.1) s'écartant de l'élément de recouvrement plat (4) au moins essentiellement dans la direction axiale de la roue, orientée au moins essentiellement dans la direction de la bissectrice (W) du volume intermédiaire des rayons (5) s'étendant dans la direction radiale de la roue, et sur laquelle est installé un bec d'encliquetage (4.3.2) pour permettre un encliquetage sur une arête (3.1) tournée vers le véhicule du rayon (3) respectif.

7. Roue conforme à l'une des revendications précédentes 5 ou 6,
dans laquelle les clips de fixation (4.3) sont en outre précontraints dans la direction périphérique de la roue par un élément de ressort (7).

8. Roue conforme à l'une des revendications précédentes,
dans laquelle il est prévu une nervure d'orientation (4.5) s'écartant axialement de l'élément de recouvrement plat (4) sur le côté tourné vers le véhicule, qui garantit une distance entre les bords de l'élément de recouvrement plat et les composants délimitant celui-ci.

9. Roue conforme à l'une des revendications précédentes,
dans laquelle il est prévu au moins une nervure de contact (4.6) appuyant l'élément de recouvrement (4) sur la roue et s'écartant axialement de l'élément de recouvrement plat (4) sur son côté tourné vers le véhicule.

10. Roue conforme à l'une des revendications précédentes,
dans laquelle l'élément de recouvrement (4) comporte une ouverture qui garantit un accès à une vanne d'air d'un pneu.
